# EUROPEAN PATENT APPLICATION

(11) **EP 1 069 764 A2**
(43) Date of publication of application: **17.01.2001**
(21) Application number: 00114189.4
(22) Date of filing: 13.07.2000
(51) Int. Cl.: H04N 5/00

(54) **Image quality confirmation apparatus and method, and recording medium recording program therefor**

(30) Priority: 16.07.1999 JP 20300899
(71) Applicant: NEC CORPORATION, Tokyo (JP)
(72) Inventor: Hane, Hidetaka, Minato-ku, Tokyo (JP)
(74) Representative: VOSSIUS & PARTNER

(57) **Abstract**

An image quality confirmation apparatus includes a random accessible stream recording medium, transcoder, decoder, image quality presentation unit, and operation unit. The random accessible stream recording medium stores a digital stream. The transcoder recompresses the digital stream with a predetermined compression parameter to generate a new digital stream. The decoder expands the new digital stream generated by the transcoder to decode it into video and audio signals. The image quality presentation unit presents the image quality of the new digital stream to the user. The operation unit causes the user to select a desired image quality based on the image quality displayed by the image quality presentation unit. The image quality presentation unit recompresses a designated digital stream with different predetermined compression parameters using the transcoder to generate a plurality of new digital streams, and lays out, plays back, and displays the plurality of new digital streams and the digital stream before recompression on a screen using the decoder to cause the user to select a desired image quality with the operation unit. An image quality confirmation method and recording medium are also disclosed.

## Description

The present invention relates to an image quality confirmation apparatus and method for compressing and encoding the video/audio digital stream of a broadcasting program or the like and a recording medium recording a program therefor and, more particularly, to an image quality confirmation apparatus and method for allowing the user to confirm the image quality of a recompressed image in recompressing and recording a digital stream, and a recording medium recording the program.

Recently in the field of television broadcasting using satellite and ground waves, digital broadcasting adopting MPEG2 coding is becoming available. As an apparatus for recording a digital broadcast, a program recording apparatus using a random access recording medium such as a magnetic hard disk is being developed.

In transmitting or accumulating data of characters, sounds, music, and images, data must be as minimum as possible in terms of the equipment and charge. Information compression is a technique of eliminating wasteful data representation in order to achieve this purpose.

In many cases, digital signals of sounds and images have strong correlation between temporally or spatially adjacent samples, and are represented very redundantly. To avoid this, various compression methods have been devised and developed into practical use.

An information compression method is also called information source coding or high-efficiency coding. Especially, an information compression method using discrete cosine transformation (DCT) is called DCT coding, which is known as one of effective compression techniques for digital image information.

Information compressed by this method is a stream of numerical values and codes having undergone special transformation, and this representation is meaningless to a user. Thus, the compressed information must be reconstructed into a signal meaningful to the user who receives and refers to the information. This reconstruction operation is called expansion with respect to compression or decoding with respect to coding.

Digital signal compression techniques can be classified into reversible coding and irreversible coding. The former can completely decode a signal into one before coding. The latter permits a distortion in a decoded signal.

The MPEG2 method for the current digital broadcasting employs a compression method by the latter irreversible coding.

This irreversible coding can attain a higher compression ratio than reversible coding. In particular, the irreversible coding is effective in an application which permits a distortion to a degree at which a sound or image can be recognized by the human sense or does not lose a meaning as information.

At present, audio/video data by digital broadcasting is to be compressed in the above manner and recorded in a recording apparatus using a random access recording medium such as a magnetic hard disk. However, the recording capacity of this recording medium is physically limited.

As a conventional technique of solving this problem, the following prior arts are disclosed.

JP-A-64-71377 discloses an image encoding apparatus which comprises a plurality of encoding means, a plurality of decoding means corresponding to the plurality of encoding means, a means for simultaneously displaying images as outputs from the plurality of decoding means together with an original image, a means for selecting a compressed image desired by the user from the simultaneously displayed images, and a means for storing the encoded data of the selected compressed image, and allows the user to variably set the compression ratio and image quality of a decoded image in accordance with an image.

Japanese Unexamined Patent Publication No. 6-91615 discloses an image signal encoding apparatus which comprises a means for displaying a plurality of reconstructed images corresponding to a plurality of compression ratios by changing the compression parameter, a means for compressing an original image using a compression parameter corresponding to a reconstructed image selected from the plurality of reconstructed images and generating compressed data, a means for encoding the compressed data using a code determined in advance by the compression parameter and generating the encoded data, and a means for outputting the compression parameter corresponding to the reconstructed image selected from the plurality of reconstructed images and the encoded data obtained using the compression parameter.

These prior arts disclose encoding apparatuses used in compressing data as analog information.

At present, however, demands arise for a digital information data compression technique along with rapid development of digital broadcasting using MPEG2 and the like.

This digital information data compression technique uses a means called a transcoder for temporarily decoding a digital stream, setting a higher compression ratio than that of the original stream, and re-encoding the decoded stream to decrease the video bit rate.

This is a decoding/encoding apparatus for decoding digital information and further compressing and encoding it, compared to the prior arts which disclose encoding apparatuses for encoding analog information.

However, this apparatus does not have any operation means for allowing the user to easily confirm and select an image quality obtained upon recompression by a transcoder.

Even a conventional VTR (Video Tape Recorder) has image quality modes called "standard" and "X3". However, image qualities cannot be confirmed till playback after recording, and are difficult to compare.

The present invention has been made to overcome the conventional drawbacks, and has as its object to provide an image quality confirmation apparatus and method which adopt a transcoder to realize the image quality confirmation method of a recording apparatus using a random access recording medium similarly to the VTR, utilize the characteristics of the random access recording medium and transcoder to easily compare and confirm the image quality, and comprise a display operation system for allowing the user to flexibly designate the compression parameter which influences the image quality, and a recording medium recording the program.

That is, it is an object of the present invention to provide an image quality confirmation apparatus and method having a displayable/operable user interface which allows the user to easily confirm an image quality upon transcoding, and a recording medium recording the program.

To achieve the above object, according to the first main aspect of the present invention, there is provided an image quality confirmation apparatus comprising random accessible stream recording means for storing a digital stream, transcoding means for recompressing the digital stream with a predetermined compression parameter to generate a new digital stream, decoding means for expanding the new digital stream generated by the transcoding means to decode the new digital stream into video and audio signals, image quality presentation means for presenting an image quality of the new digital stream to a user, and operation means for causing the user to select a desired image quality based on the image quality displayed by the image quality presentation means, wherein the image quality presentation means recompresses a designated digital stream with different predetermined compression parameters using the transcoding means to generate a plurality of new digital streams, and lays out, plays back, and displays the plurality of new digital streams and the digital stream before recompression on a screen using the decoding means to cause the user to select a desired image quality with the operation means.

In the image quality confirmation apparatus defined in the first main aspect, the image quality presentation means temporarily accumulates the plurality of new digital streams recompressed by the transcoding means in the stream recording means, and simultaneously plays back and displays the plurality of recorded digital streams to the user by the decoding means.

In the image quality confirmation apparatus defined in the first main aspect, the apparatus further comprises a plurality of transcoding means having a plurality of different compression parameters, and the image quality presentation means outputs a digital stream designated by the user to the plurality of transcoding means to simultaneously generate a plurality of new digital streams, and simultaneously plays back and displays the plurality of simultaneously generated new digital streams by the decoding means.

In the image quality confirmation apparatus defined in the first main aspect, the image quality presentation means recompresses digital streams by a plurality of transcoding means assigned with different compression parameters in advance.

In the image quality confirmation apparatus defined in the first main aspect, the apparatus further comprises operation input means for causing the user to set an arbitrary compression parameter, and the image quality confirmation means recompresses digital streams by the transcoding means on the basis of a compression parameter input by the operation input means.

In the image quality confirmation apparatus defined in the first main aspect, the image quality presentation means superposes on each playback image an image quality graph which enables visually confirming numerical representation of an image quality based on the compression parameter when digital streams recompressed based on different compression parameters are to be played back and displayed.

In the image quality confirmation apparatus defined in the first main aspect, the image quality graph is displayed based on a bit rate value of a corresponding digital stream.

To achieve the above object, according to the second main aspect of the present invention, there is provided an image quality confirmation method comprising the transcoding step of recompressing a digital stream to generate a new digital stream, wherein a designated digital stream is recompressed with different compression parameters in the transcoding step to generate a plurality of new digital streams, and the new digital streams and a digital stream before recompression are laid out, played back, and displayed on a screen to cause a user to select a desired image quality.

In the image quality confirmation method defined in the second main aspect, the method further comprises the digital stream storage step of storing the plurality of new digital streams recompressed in the transcoding step, and the respective digital streams stored in the digital stream storage step are simultaneously played back and displayed.

In the image quality confirmation method defined in the second main aspect, the transcoding step comprises simultaneously recompressing a plurality of digital streams by a plurality of transcoding means having different compression parameters.

The image quality confirmation method defined in the second main aspect further comprises the step of superposing on each playback image an image quality graph which enables visually confirming numerical representation of an image quality based on the compression parameter when digital streams recompressed at different compression parameters are to be played back and displayed.

To achieve the above object, according to the third main aspect of the present invention, a recording medium which stores a program for executing the re-encoding process of re-encoding a first signal as a digital signal based on a predetermined compression parameter to output a second signal as a digital signal, the storage process of storing the first and second signals, and the display process of expanding either one or both of the first and second signals stored in the storage process into video/audio signals, and dividing a window into subwindows on a single screen to display the video/audio signals.

As is apparent from the above aspects, the image quality confirmation apparatus and method and the recording medium recording the program comprise random accessible stream recording means such as a magnetic disk capable of recording digital streams prepared by encoding video and audio signals, transcoding means for recompressing the digital streams, decoding means for expanding the digital streams into video and audio signals and outputting them, and image quality presentation means for simultaneously playing back the plurality of recompressed digital streams using the decoding means. With this arrangement, the user can compare images of a selected image that are recompressed with different compression parameters while simultaneously playing back the images. The user can easily grasp the image quality of each image and select a desired image quality.

At this time, a graph representing the bit rate or image quality of each stream is superposed and displayed on a corresponding subwindow, which allows the user to visually confirm numerical representation of the image quality.

A subwindow on which the user can operate the recompression parameter is displayed in addition to these subwindows to cause the user to operate and change the parameter in real time, confirm a change in image quality, and select a desired image quality. Accordingly, the user can dynamically generate, select, and designate a desired image quality.

The above and many other objects, features and advantages of the present invention will become manifest to those skilled in the art upon making reference to the following detailed description and accompanying drawings in which preferred embodiments incorporating the principle of the present invention are shown by way of illustrative examples.
Fig. 1 is a block diagram showing a hardware arrangement of an image quality confirmation apparatus according to the present invention applied to a program recording/playback apparatus:
Fig. 2 is a view showing the schematic window arrangement of an image quality confirmation apparatus in the first embodiment of the present invention;
Figs. 3A and 3B are views each showing an example of an image quality graph in the first embodiment of the present invention;
Fig. 4 is a flow chart showing the flow of processing in the first embodiment of the present invention;
Fig. 5 is a view showing the schematic window arrangement of an image quality confirmation apparatus in the second embodiment of the present invention: and
Fig. 6 is a flow chart showing the flow of processing in the second embodiment of the present invention.

Several preferred embodiments of an image quality confirmation apparatus and method and a recording medium recording the program according to the present invention will be described in detail below with reference to the accompanying drawings.

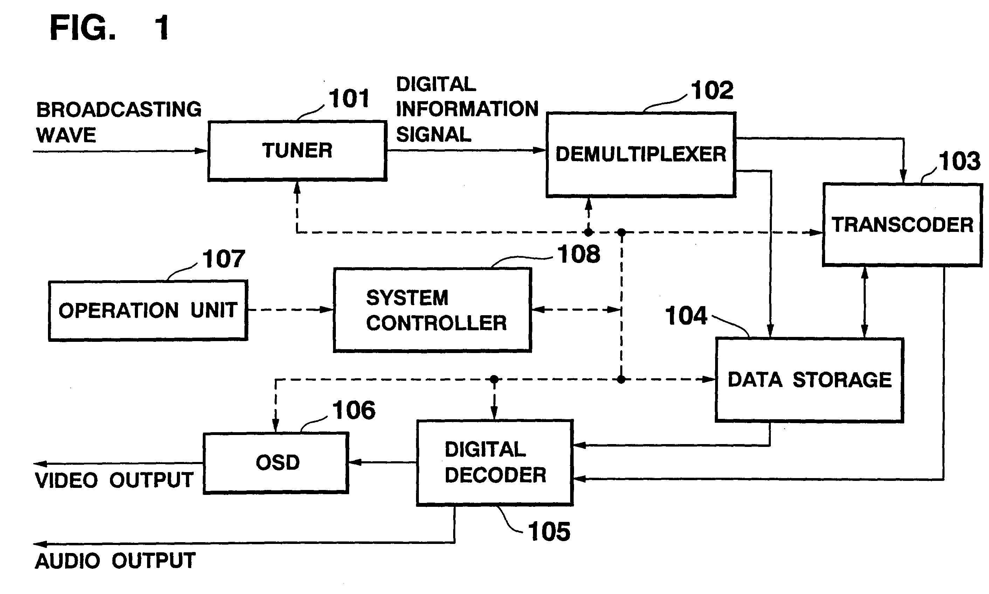

Fig. 1 is a block diagram showing a hardware arrangement of a program recording/playback apparatus to which the image quality confirmation apparatus and method and the recording medium recording the program according to the present invention are applied. In the mode of the present invention, the program recording/playback apparatus comprises the image quality confirmation apparatus, and copes with digital broadcasting waves. In Fig. 1, the solid line represents the flow of data, and the broken line represents the flow of a control signal.

The arrangement shown in Fig. 1 will be described in more detail. A satellite or ground wave, i.e., video/audio digital signal received by an antenna or cable is supplied to a tuner 101, and selectively supplied via the tuner 101 to a channel controlled by a system controller 108.

Since a digital signal on a selected channel generally has multiplexed information, the digital signal is demultiplexed into elements such as audio and video digital streams by a demultiplexer 102.

The demultiplexed digital streams are accumulated in a data storage 104 under the control of the system controller 108 in recording a program. In playing back a program, the video and audio digital streams of the program are read out from the data storage 104 under the control of the system controller 108, and expanded into video and audio signals by a digital decoder 105. The video signal is superposed on information of an OSD (On-Screen Display) 106, and then output. The data storage 104 is formed from a hard disk or optical disk.

Under the control of the system controller 108, a transcoder 103 receives the digital stream of a broadcasting program output from the demultiplexer 102 or the digital stream of a program recorded on the data storage 104. The transcoder 103 recompresses the received digital stream, and stores it in the data storage 104 again or transmits it to the digital decoder 105 to output the stream as a video/audio signal.

The system controller 108 is constituted by a microcomputer serving as the nucleus of the software processing function, a random access memory and read-only memory for holding programs and data, an I/O controller for controlling peripheral devices, and a real-time clock for maintaining the current time in order to manage the recording time. As described above, the system controller 108 controls each hardware of the program recording/playback apparatus having the image quality confirmation apparatus.

The digital decoder 105 has a function of simultaneously receiving a plurality of digital streams and simultaneously playing back them as subwindows laid out on one window.

An operation unit 107 is made up of the front panel, and remote controller of the program recording/playback apparatus. The operation unit 107 receives an operation request from the user, and transmits it to the system controller 108. The system controller 108 executes processing corresponding to the request.

Note that the above-described hardware arrangement example is applied to digital broadcasting of broadcasting images and sounds by digital streams, but can also be applied to, e.g., an analog ground wave. To cope with the analog ground wave, a digital encoder for encoding an analog stream into a digital stream is arranged at the output stage of the tuner 101.

### First Embodiment:

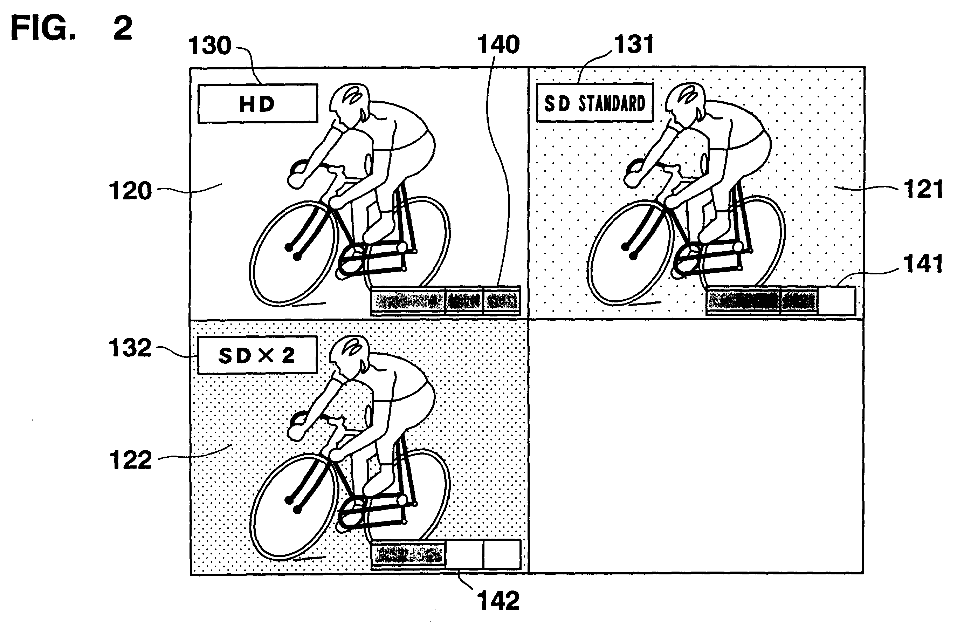

A window arrangement of an image quality confirmation apparatus according to the first embodiment which describes the example shown in Fig. 1 in more detail will be explained in detail with reference to Fig. 2.

The window shown in Fig. 2 is comprised of a subwindow 120 which plays back and displays a digital signal received via a tuner 101 without compressing the signal by a transcoder 103, and subwindows 121 and 122 each of which plays back and displays an image compressed by the transcoder 103 with a predetermined compression parameter set in advance in the image quality confirmation apparatus.

Texts 130, 131, and 132 which express their image qualities in words, and image quality graphs 140, 141, and 142 which visually express numerical representation of the image qualities are superposed on these subwindows.

In the first embodiment, an original video digital stream played back and displayed on the subwindow 120 has already been recorded on a data storage 104. Digital streams on the subwindows 121 and 122 which display images compressed by the transcoder 103 are obtained by recompressing the original video digital stream with predetermined compression parameters in advance, and are recorded on the data storage 104. In presenting digital streams to the user, the three digital streams are sent to a digital decoder 105, simultaneously played back, and displayed on corresponding subwindows in synchronism with each other.

The texts superposed on the subwindows 120, 121, and 122 represent the image qualities of the corresponding subwindows. In the first embodiment, the original image on the subwindow 120 has an HD (High Definition: high-definition video) image quality. The subwindow 121 displays an image prepared by recompressing this original image with an SD (Standard Definition: standard-definition video) image quality. The subwindow 122 displays an image prepared by recompressing the original image with an SDX2 time-length (half bit rate) image quality. The subwindows 121 and 122 shown in Fig. 2 simultaneously play back and display these compressed images.

The image quality graphs 140, 141, and 142 at the lower right corners of the respective subwindows visually display numerical representations of the image qualities of the corresponding subwindows. In the first embodiment, the image quality graph is a bar graph exhibiting a higher quality with a larger value.

As shown in Fig. 2, the image quality graph 140 of the subwindow 120 which plays back and displays an image with the HD image quality reaches the maximum value, which means that the original image is recorded with the highest image quality. The image quality graphs 141 and 142 of the subwindows 121 and 122 which display recompressed images exhibit values corresponding to the image qualities.

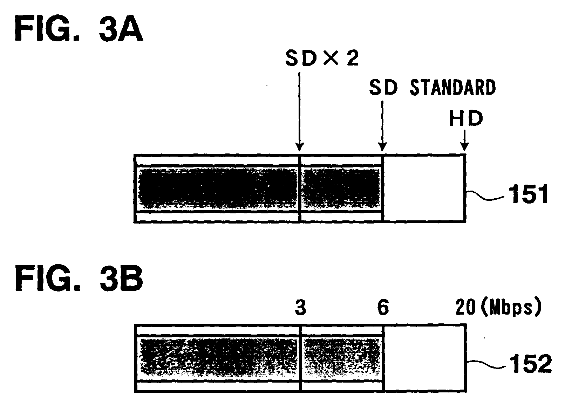

Figs. 3A and 3B are examples of the image quality graph in the first embodiment shown in Fig. 2.

The transcoder can be constituted by various methods. For example, the transcoder recompresses a received original digital stream at a constant average bit rate.

In examples of the image quality graph shown in Figs. 3A and 3B, the image quality graph is formed based on the bit rate of the digital stream. In Figs. 3A and 3B, the transcoder 103 recompresses an original HD-class image having a bit rate of 20 Mbps (Mega bit per second) into average bit rates of 6 Mbps and 3 Mbps to present them as SD-standard and SDX2 Image qualities to the user.

An image quality graph 151 shown in Fig. 3A presents the image quality using text representation of HD, SD standard, and SDX2 corresponding to respective bit rates. An image quality graph 152 shown in Fig. 3B presents the degree of image quality to the user by directly using the numeral value of the bit rate instead of text representation used by the image quality graph 151.

Depending on the arrangement of the transcoder, the image quality graph can be drawn with another compression parameter or estimated recording capacity value in place of the average bit rate as shown in Figs. 3A and 3B.

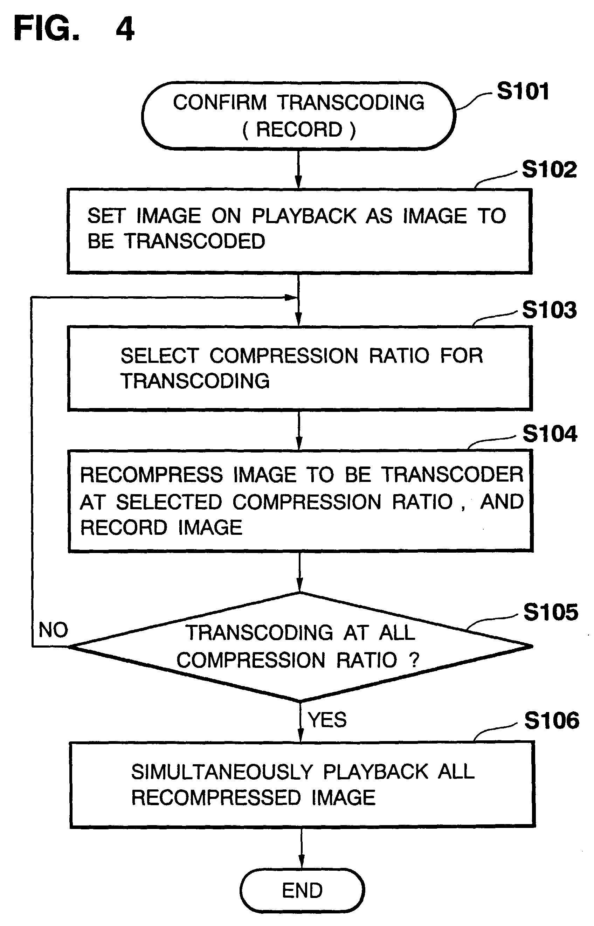

The flow of processing in the first embodiment of the present invention will be explained with reference to the flow chart of Fig. 4.

In the first embodiment, an image recorded in advance is transcoded to confirm the image quality. The user first selects a desired image to be confirmed from images recorded on the data storage 104, and plays back the selected image.

Then, the user inputs a control instruction for starting confirmation to the image quality confirmation apparatus with an input means formed from the button of a remote controller (not shown) or the like. Processing starts from step S101 in the flow chart shown in Fig. 4.

In step S102, the current program on playback is selected as an image to be transcoded. In step S103, a compression ratio for transcoding in this processing is selected. In the example of Fig. 2, an average bit rate of 6 Mbps is selected, and then 3 Mbps is selected in the next cycle. Thus, in step S103, compression at a compression ratio for an average bit rate of 6 Mbps is selected. The flow returns from step S105 to select a compression ratio for an average bit rate of 3 Mbps in the next compression.

In step S104, the image to be transcoded is recompressed by the transcoder 103 at the compression ratio selected in step S103, and recorded on the data storage 104.

In step S105, the loop of steps S103 and S104 is executed until transcoding is performed at all predetermined compression ratios.

After recompression is completed, recompressed digital streams recorded in step S106 are simultaneously played back together with the original digital stream, thereby displaying the subwindows 120, 121, and 122 as shown in Fig. 2.

### Second Embodiment:

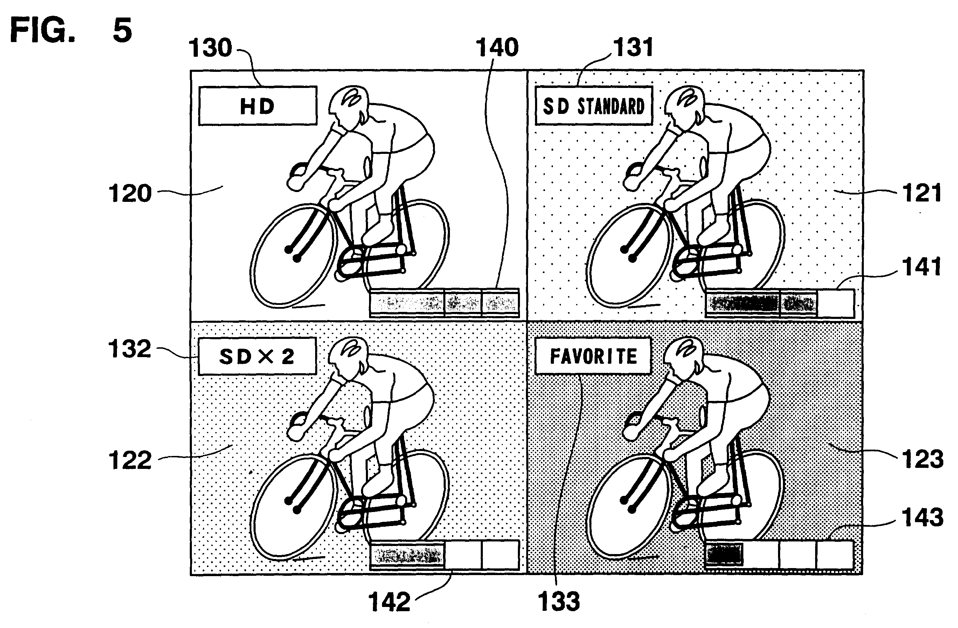

The window arrangement of an image quality confirmation apparatus according to the second embodiment of the present invention will be described in detail with reference to Fig. 5.

Unlike the window of the first embodiment in Fig. 2, the window in Fig. 5 additionally comprises a subwindow 123 for freely adjusting the image quality by the user. In the example of Fig. 5, an image obtained by processing an original video digital stream in real time by a transcoder 103 at a compression ratio set by the user is supplied to a digital decoder 105, simultaneously played back, and displayed as a subwindow, in addition to the original video data stream, and images which are obtained by recompressing the original digital stream by the transcoder 103 and are recorded on a data storage 104 in advance, as described in the first embodiment.

In this case, the compression ratio which can be set by the user in real time may be continuously changed or may be selected by the user from discontinuously set choices.

On the subwindow 123, a "favorite" as a text 133 representing the image quality, and an image quality graph 143 representing the degree of image quality are superposed on a playback image. The image quality designated by the user can be changed in real time during playback with the button of a pre-assigned remote controller (not shown). The image quality value is visually displayed on the image quality graph 143. In the example of Fig. 5, the value of the image quality graph 143 is smaller than the value of an SDX2 image quality graph 142, which means that the image quality is lower than the SDX2 image quality.

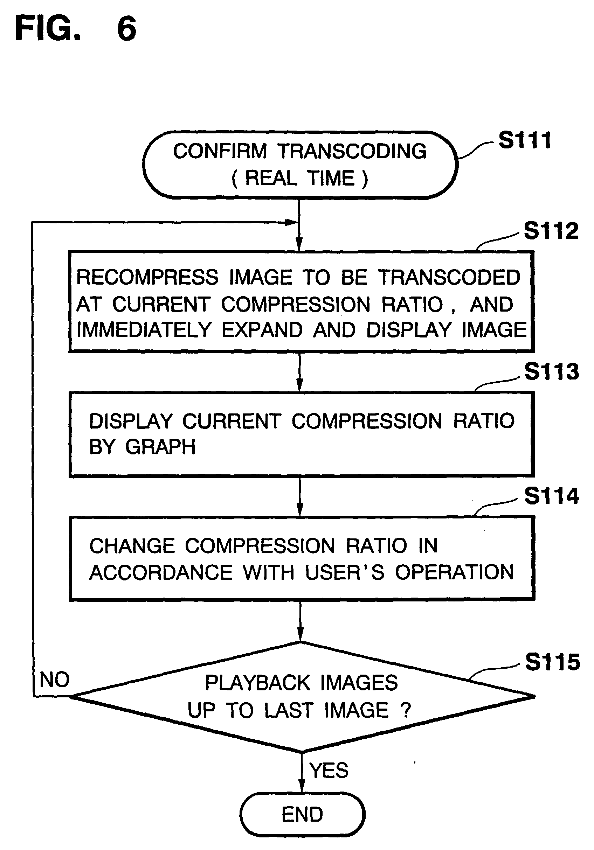

The flow of processing in the second embodiment of the present invention is the different from the flow of processing in the first embodiment shown in Fig. 4 in that processing for the subwindow 123 is added. The contents of this processing will be explained in detail with reference to the flow chart of Fig. 6.

If a transcoding instruction input by the user is confirmed in step S111, similar to step S101 shown in Fig. 4, an image to be transcoded is recompressed by the transcoder 103 at the current compression ratio designated by the user in step S112. The output is directly supplied to the digital decoder 105 to display the image of the subwindow 123. In step S113, the current compression ratio is reflected on the image quality graph 143.

In step S114, user's operation of a remote controller or the like is detected to change the current compression ratio in accordance with this. Processing in steps S112, S113, and S114 is repeated until the end of playing back an image to be transcoded is determined in step S115.

In this manner, the user can change the image quality on the subwindow 123 in real time, and select a desired image quality while comparing it with another image quality.

In the first and second embodiments, the transcoder 103 recompresses only one digital stream at once, and the recompressed digital stream is temporarily recorded on the data storage 104 and then played back. Alternatively, a transcoder capable of simultaneously processing a plurality of digital streams may be used to play back and display the images of subwindows in real time without recording digital streams on the data storage. In this case, an original digital stream may be a digital stream recorded on the data storage 104 in advance, or a digital stream on broadcasting from the tuner 101 via the demultiplexer 102.

The text representation of the image quality is given by "HD", "SD standard", "SDX2" and "favorite", which may be replaced by popular terms in the actual broadcasting or industry.

The characteristic features of the image quality confirmation apparatus and method and the recording medium recording the program according to the present invention will be summarized. The present invention comprises a random accessible stream recording means such as a magnetic disk capable of recording digital streams obtained by encoding video and audio signals, a transcoding means for recompressing the digital streams, a decoding means for expanding the digital streams into video and audio signals and outputting them, and an image quality presentation means for simultaneously playing back the plurality of recompressed digital streams using the decoding means.

The image quality presentation means generates new digital streams prepared by recompressing a digital stream recorded on the stream recording means using the transcoding means with a plurality of different preset compression parameters, and records the generated digital streams on the stream recording means. The generated digital streams are arranged as subwindows in a tiled layout together with the original digital stream, simultaneously played back, and displayed to cause the user to confirm the image quality.

At this time, a graph representing the bit rate or image quality of each stream is superposed and displayed on a corresponding subwindow.

A subwindow on which the user can operate the recompression parameter is displayed in addition to these subwindows to cause the user to operate and change the parameter in real time, confirm a change in image quality, and select a desired image quality.

## Claims

1. An image quality confirmation apparatus comprising:
random accessible stream recording means for storing a digital stream;
transcoding means for recompressing the digital stream with a predetermined compression parameter to generate a new digital stream;
decoding means for expanding the new digital stream generated by said transcoding means to decode the new digital stream into video and audio signals;
image quality presentation means for presenting an image quality of the new digital stream to a user; and
operation means for causing the user to select a desired image quality based on the image quality displayed by said image quality presentation means,
wherein said image quality presentation means recompresses a designated digital stream with different predetermined compression parameters using said transcoding means to generate a plurality of new digital streams, and lays out, plays back, and displays the plurality of new digital streams and the digital stream before recompression on a screen using said decoding means to cause the user to select a desired image quality with said operation means.

2. An apparatus according to claim 1, wherein said image quality presentation means temporarily accumulates the plurality of new digital streams recompressed by said transcoding means in said stream recording means, and simultaneously plays back and displays the plurality of recorded digital streams to the user by the decoding means.

3. An apparatus according to claim 1 or 2, wherein said apparatus further comprises a plurality of transcoding means having a plurality of different compression parameters, and
said image quality presentation means outputs a digital stream designated by the user to said plurality of transcoding means to simultaneously generate a plurality of new digital streams, and simultaneously plays back and displays the plurality of simultaneously generated new digital streams by said decoding means.

4. An apparatus according to any one of claims 1 to 3, wherein said image quality presentation means simultaneously recompresses a plurality of digital streams by a plurality of transcoding means assigned with different compression parameters in advance.

5. An apparatus according to any one of claims 1 to 4, wherein said apparatus further comprises operation input means for causing the user to set an arbitrary compression parameter, and
said image quality confirmation means recompresses a plurality of digital streams by said transcoding means on the basis of a compression parameter input by said operation input means.

6. An apparatus according to any one of claims 1 to 5, wherein said image quality presentation means superposes on each playback image an image quality graph which enables visually confirming numerical representation of an image quality based on the compression parameter when digital streams recompressed based on different compression parameters are to be played back and displayed.

7. An apparatus according to claim 6, wherein said image quality graph is displayed based on a bit rate value of a corresponding digital stream.

8. An image quality confirmation method comprising:
the transcoding step of recompressing a digital stream to generate a new digital stream,
wherein a designated digital stream is recompressed with different compression parameters in the transcoding step to generate a plurality of new digital streams, and the new digital streams and a digital stream before recompression are laid out, played back, and displayed on a screen to cause a user to select a desired image quality.

9. A method according to claim 8, wherein the method further comprises the digital stream storage step of storing the plurality of new digital streams recompressed in the transcoding step, and
the respective digital streams stored in the digital stream storage step are simultaneously played back and displayed.

10. A method according to claim 8, wherein the transcoding step comprises simultaneously recompressing a plurality of digital streams by a plurality of transcoding means having different compression parameters.

11. A method according to any one of claims 8 to 10, further comprising the step of superposing on each playback image an image quality graph which enables visually confirming numerical representation of an image quality based on the compression parameter when digital streams recompressed at different compression parameters are to be played back and displayed.

12. An image quality confirmation apparatus comprising:
re-encoding means for re-encoding a first signal as a digital signal based on a predetermined compression parameter to output a second signal as a digital signal;
storage means for storing the first and second signals; and
display means for expanding either one or both of the first and second signals stored in said storage means into video/audio signals, and dividing a window into subwindows on a single screen to display the video/audio signals.

13. An image quality confirmation apparatus comprising:
re-encoding means for re-encoding a first signal as a digital signal based on a predetermined compression parameter to output a second signal as a digital signal; and
display means for expanding either one or both of the first and second signals into video/audio signals, and dividing a window into subwindows on a single screen to display the video/audio signals,
wherein said re-encoding means includes a plurality of re-encoding means having different compression parameters.

14. An image quality confirmation apparatus comprising:
reception means for receiving a multiplexed/transmitted signal;
demultiplexing means for demultiplexing a first signal as a digital stream from the signal received by said reception means;
first storage means for storing the first signal demultiplexed by said demultiplexing means;
re-encoding means for re-encoding the first signal demultiplexed by said demultiplexing means, based on a predetermined compression parameter to output a second signal;
second storage means for storing the second signal output from said re-encoding means; and
display means for expanding either one or both of the first signal stored in said first storage means and the second signal stored in said second storage means into video/audio signals, and dividing a window into subwindows on a single screen to display the video/audio signals.

15. An image quality confirmation apparatus comprising:
reception means for receiving a multiplexed/transmitted signal;
demultiplexing means for demultiplexing a first signal as a digital stream from the signal received by said reception means;
first storage means for storing the first signal demultiplexed by said demultiplexing means;
re-encoding means for re-encoding the first signal demultiplexed by said demultiplexing means, based on a predetermined compression parameter to output a second signal; and
display means for expanding either one or both of the first signal stored in said first storage means and the second signal output from said re-encoding means into video/audio signals, and dividing a window into subwindows on a single screen to display the video/audio signals,
wherein said re-encoding means includes a plurality of re-encoding means having different compression parameters.

16. An apparatus according to claim 12 or 14, wherein the predetermined compression parameter includes a plurality of different compression parameters, and
said re-encoding means executes recompression based on the plurality of compression parameters.

17. An apparatus according to any one of claims 12 to 15, wherein the predetermined compression parameter includes a plurality of different compression parameters set in advance, and
said re-encoding means executes recompression based on the plurality of compression parameters.

18. An apparatus according to any one of claims 12 to 16, wherein said apparatus further comprises operation means for causing a user to set at least one compression parameter, and
the predetermined compression parameter includes said at least one compression parameter set by said operation means.

19. An apparatus according to claim 18, wherein the predetermined compression parameter is at least one of preset compression parameters and compression parameters set by said operation means.

20. An apparatus according to any one of claims 12 to 19, wherein said apparatus further comprises image quality presentation means for presenting the compression parameter to a user by a predetermined display format, and
each subwindow displays an image of each video/audio signal and the predetermined display format presented by said image quality presentation means.

21. An apparatus according to claim 20, wherein the predetermined display format includes a format which is displayed by a component bar graph using SDX2, SD standard, and HD sequentially set along an axis, has HD as the highest image quality, and represents a higher image quality as a scale is closer to HD.

22. An apparatus according to claim 20, wherein the predetermined display format includes a display format which displays an axial direction by a bit rate in compression.

23. An image quality confirmation method comprising:
the re-encoding step of re-encoding a first signal as a digital signal based on a predetermined compression parameter to output a second signal as a digital signal;
the storage step of storing the first and second signals; and
the display step of expanding either one or both of the first and second signals stored in the storage step into video/audio signals, and dividing a window into subwindows on a single screen to display the video/audio signals.

24. An image quality confirmation method comprising:
the re-encoding step of re-encoding a first signal as a digital signal based on a predetermined compression parameter to output a second signal as a digital signal; and
the display step of expanding either one or both of the first and second signals into video/audio signals, and dividing a window into subwindows on a single screen to display the video/audio signals,
wherein the re-encoding step comprises simultaneously generating a plurality of second signals based on different compression parameters.

25. An image quality confirmation method comprising:
the reception step of receiving a multiplexed/transmitted signal;
the demultiplexing step of demultiplexing a first signal as a digital stream from the signal received in the reception step;
the first storage step of storing the first signal demultiplexed in the demultiplexing step;
the re-encoding step of re-encoding the first signal demultiplexed in the demultiplexing step, based on a predetermined compression parameter to output a second signal;
the second storage step of storing the second signal output in the re-encoding step; and
the display step of expanding either one or both of the first signal stored in the first storage step and the second signal stored in the second storage step into video/audio signals, and dividing a window into subwindows on a single screen to display the video/audio signals.

26. An image quality confirmation method comprising:
the reception step of receiving a multiplexed/transmitted signal;
the demultiplexing step of demultiplexing a first signal as a digital stream from the signal received in the reception step;
the first storage step of storing the first signal demultiplexed in the demultiplexing step;
the re-encoding step of re-encoding the first signal demultiplexed in the demultiplexing step, based on a predetermined compression parameter to output a second signal; and
the display step of expanding either one or both of the first signal stored in the first storage step and the second signal output in the re-encoding step into video/audio signals, and dividing a window into subwindows on a single screen to display the video/audio signals,
wherein the re-encoding step comprises simultaneously generating a plurality of second signals based on different compression parameters.

27. A method according to claim 23 or 25, wherein the predetermined compression parameter includes a plurality of different compression parameters, and
the re-encoding step comprises executing recompression based on the plurality of compression parameters.

28. A method according to any one of claims 23 to 26, wherein the predetermined compression parameter includes a plurality of different compression parameters set in advance, and
the re-encoding step comprises executing recompression based on the plurality of compression parameters.

29. A method according to any one of claims 23 to 27, wherein the method further comprises the operation step of causing a user to set at least one compression parameter, and
the predetermined compression parameter includes said at least one compression parameter set in the operation step.

30. A method according to claim 29, wherein the predetermined compression parameter is at least one of preset compression parameters and compression parameters set in the operation step.

31. A method according to any one of claims 23 to 30, wherein the method further comprises the image quality presentation step of presenting the compression parameter to a user by a predetermined display format, and
each subwindow displays an image of each video/audio signal and the predetermined display format presented in the image quality presentation step.

32. A method according to claim 31, wherein the predetermined display format includes a format which is displayed by a component bar graph using SDX2, SD standard, and HD sequentially set along an axis, has HD as the highest image quality, and represents a higher image quality as a scale is closer to HD.

33. A method according to claim 31, wherein the predetermined display format includes a display format which displays an axial direction by a bit rate in compression.

34. A recording medium which stores a program for executing:
the re-encoding process of re-encoding a first signal as a digital signal based on a predetermined compression parameter to output a second signal as a digital signal;
the storage process of storing the first and second signals; and
the display process of expanding either one or both of the first and second signals stored in the storage process into video/audio signals, and dividing a window into subwindows on a single screen to display the video/audio signals.

35. A recording medium which stores a program for executing:
the re-encoding process of re-encoding a first signal as a digital signal based on a predetermined compression parameter to output a second signal as a digital signal; and
the display process of expanding either one or both of the first and second signals into video/audio signals, and dividing a window into subwindows on a single screen to display the video/audio signals,
wherein the re-encoding process comprises simultaneously generating a plurality of second signals based on different compression parameters.

36. A recording medium which stores a program for executing:
the reception process of receiving a multiplexed/transmitted signal;
the demultiplexing process of demultiplexing a first signal as a digital stream from the signal received in the reception process;
the first storage process of storing the first signal demultiplexed in the demultiplexing process;
the re-encoding process of re-encoding the first signal demultiplexed in the demultiplexing process, based on a predetermined compression parameter to output a second signal;
the second storage process of storing the second signal output in the re-encoding process; and
the display process of expanding either one or both of the first signal stored in the first storage process and the second signal stored in the second storage process into video/audio signals, and dividing a window into subwindows on a single screen to display the video/audio signals.

37. A recording medium which stores a program for executing:
the reception process of receiving a multiplexed/transmitted signal;
the demultiplexing process of demultiplexing a first signal as a digital stream from the signal received in the reception process;
the first storage process of storing the first signal demultiplexed in the demultiplexing process;
the re-encoding process of re-encoding the first signal demultiplexed in the demultiplexing process, based on a predetermined compression parameter to output a second signal; and
the display process of expanding either one or both of the first signal stored in the first storage process and the second signal output in the re-encoding process into video/audio signals, and dividing a window into subwindows on a single screen to display the video/audio signals,
wherein the re-encoding process comprises simultaneously generating a plurality of second signals based on different compression parameters.

38. A medium according to claim 34 or 36, wherein the predetermined compression parameter includes a plurality of different compression parameters, and
the re-encoding process comprises executing recompression based on the plurality of compression parameters.

39. A medium according to any one of claims 34 to 38, wherein the predetermined compression parameter is set in advance.

40. A medium according to any one of claims 34 to 38, wherein the program further executes the operation process of causing a user to set at least one compression parameter, and
the predetermined compression parameter includes said at least one compression parameter set in the operation process.

41. A medium according to claim 40, wherein the predetermined compression parameter is at least one of preset compression parameters and compression parameters set in the operation process.

42. A medium according to any one of claims 34 to 41, wherein the program further executes the image quality presentation process of presenting the compression parameter to a user by a predetermined display format, and
each subwindow displays an image of each video/audio signal and the predetermined display format presented in the image quality presentation process.

43. A medium according to claim 42, wherein the predetermined display format includes a format which is displayed by a component bar graph using SDX2, SD standard, and HD sequentially set along an axis, has HD as the highest image quality, and represents a higher image quality as a scale is closer to HD.

44. A medium according to claim 42, wherein the predetermined display format includes a display format which displays an axial direction by a bit rate in compression.
